(19) **Europäisches Patentamt / European Patent Office / Office européen des brevets**

(11) **EP 4 506 138 A1**

(12) **EUROPEAN PATENT APPLICATION**
published in accordance with Art. 153(4) EPC

(43) Date of publication:
**12.02.2025 Bulletin 2025/07**

(21) Application number: **22936589.5**

(22) Date of filing: **27.10.2022**

(51) International Patent Classification (IPC):
**B29C 45/76** $^{(2006.01)}$  **B29C 45/78** $^{(2006.01)}$

(52) Cooperative Patent Classification (CPC):
**B29C 45/76; B29C 45/78**

(86) International application number:
**PCT/JP2022/040108**

(87) International publication number:
**WO 2023/195194 (12.10.2023 Gazette 2023/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.04.2022 JP 2022063309**

(71) Applicant: **Nissei Plastic Industrial Co., Ltd.**
**Hanishina-gun, Nagano 389-0693 (JP)**

(72) Inventor: **KOZUKA, Makoto**
**Hanishina-gun, Nagano 389-0693 (JP)**

(74) Representative: **Haseltine Lake Kempner LLP**
**Bürkleinstrasse 10**
**80538 München (DE)**

(54) **MOLDING OPTIMIZATION METHOD AND DEVICE FOR INJECTION MOLDING MACHINE**

(57) Basic molding conditions for an initial resin material Cro, Cgo used at the beginning of production of a predetermined molded product, and a basic melting property Pro, Pgo related to the molten state of the initial resin material Cro, Cgo based on the basic molding conditions are obtained. When an additional resin material Crs, Cgs to which the initial resin material Cro, Cgo is switched to continue the production of the molded product is used, second molding conditions for the additional resin material Crs, Cgs and a second melting property Prs, Pgs related to the molten state of the additional resin material Crs, Cgs based on the second molding conditions are obtained, and a conversion process, including at least conversion of a set temperature, is performed for the second molding conditions by a predetermined conversion means such that the second melting property Prs, Pgs approximates the basic melting property Pro, Pgo.

**Fig.1**

EP 4 506 138 A1

## Description

### Technical Field

The present invention relates to a molding optimization method and a molding optimization device for an injection molding machine which is preferably used when molded products are produced by injecting and charging a plasticized molten resin into a mold by a screw.

### Background Art

In general, an injection molding machine produces molded products by injecting and charging a plasticized molten resin into a mold by a screw. Therefore, whether or not it is possible to optimize molding conditions for a resin material to be used and properly maintain the optimized molding conditions is an important factor for securing desired molding quality. Therefore, various means (methods) for optimizing molding conditions have been proposed.

Conventionally known means (methods) for optimizing molding conditions include a molding support apparatus for an injection molding machine disclosed in Patent Document 1 and a molding condition optimization method for an injection molding machine disclosed in Patent Document 2.

The object of the molding support apparatus disclosed in Patent Document 1 is to increase efficiency and stability of a heating cylinder by enabling setting of an optimal (accurate) temperature for temperature control that matches a type of a resin, and to improve plasticization quality and ensure high molding quality by widening a range of adjustment of overall molding conditions. Specifically, the molding support apparatus includes a temperature control section which controls the temperature of a material supply section for supplying a resin material into a heating cylinder, and a molding machine controller which includes a basic data input section through which the type of the resin can be inputted, a data processing section having a temperature control temperature data table and a temperature setting section, and an output processing function section. In the temperature control temperature data table, the optimal temperature for temperature control by the temperature control section is set for each type of resin. When the type of resin is inputted from the basic data input section at the time of setting molding conditions, the temperature setting section reads the temperature for temperature control corresponding to the inputted type of resin from the temperature control temperature data table and sets the read temperature for temperature control as the temperature for the temperature control performed by the temperature control section. The output processing function section performs a process of displaying the temperature control temperature on a display.

The object of the molding condition optimization method disclosed in Patent Document 2 is to provide a method for quickly and simply setting optimal molding conditions of an injection molding machine. Specifically, conforming products molding conditions composed of an injection profile and a pressure holding profile are set by a trial molding test while changing the molding conditions. The trial molding test is again performed on the basis of the set conditions, major molding variables are measured and monitored, and the variation ranges of the major molding variables stemming from environmental changes of the molten state during molding are obtained. A plurality of updated molding tests are performed under updated molding conditions based on a new combination of the major molding variables obtained by an experimental design method in consideration of the above-mentioned variation ranges. For each molded product obtained as a result of the molding test, the appearance quality is judged visually by an operator. When there is a defective item, the above-mentioned molding conditions are corrected by using a correction program, and the updated molding test is repeated. When there are no defective items, the last updated molding conditions are used as the optimal molding conditions.

### Prior Art Publications

### Patent Publications

    Patent Document 1: JP2020-1183A
    Patent Document 2: JPH10-272663A

### Disclosure of the Invention

### Problem to be Solved by the Invention

However, the above-described conventional means (methods) for optimizing molding conditions have the following problems to be solved.

Namely, the conventional means (methods) have optimized condition values (molding conditions) from the viewpoint of only their absolute values; in other words, the conventional means (methods) have focused on how to accurately and precisely set the molding conditions in real time. Therefore, the reality is that the conventional means (methods) have failed to optimize molding conditions from the viewpoint of their relative values. Although the conventional means (methods) have coped with fluctuations, caused by disturbances such as outside air temperature, by performing, for example, a correction process, there is a problem that it cannot be said that the conventional means (methods) have sufficiently coped with changing of the production lot of resin material and changing of the grade of the resin material.

Therefore, in the case where, for example, the residual amount of the resin material initially used decreases during production of a predetermined molded product and a new resin material is added (for replenishment), it is not uncommon that the number of defective molded products increases because the production lot of the new resin material differs from the production lot of the initially used resin material. In such a case, it is not easy to grasp that the increase in the number of defective molded products is due to slight differences in physical property values between the resin materials, and to grasp the kinds of the physical property values and the degree of the differences between resin materials, and how all the differences affect the number of defective molded products as a whole.

In the end, addition of a new resin material has caused a decrease in production efficiency because, for example, an operator has been forced to reset the molding conditions. In addition, although it would be good if the same molded product is obtained by resetting the molding conditions, it would have a considerable impact on the variation of the molded products. Therefore, there has been a problem that the quality and uniformity of the molded products cannot be sufficiently ensured

An object of the present invention is to provide a molding optimization method and a molding optimization device for an injection molding machine which have solved the problems present in the background art.

**Means for Solving the Problem**

A molding optimization method for an injection molding machine M according to the present invention, which has solved the above-described problem, is a molding optimization method for the injection molding machine M which optimizes molding conditions for producing a molded product by injecting and charging a plasticized molten resin into a die 2 by a screw 3. The molding optimization method is characterized in that

basic molding conditions for an initial resin material Cro, Cgo used at the beginning of production of a predetermined molded product, and a basic melting property Pro, Pgo related to a molten state of the initial resin material Cro, Cgo based on the basic molding conditions are obtained beforehand; and

when an additional resin material Crs, Cgs to which the initial resin material Cro, Cgo is switched to continue production of the molded product is used, second molding conditions for the additional resin material Crs, Cgs, and a second melting property Prs, Pgs related to a molten state of the additional resin material Crs, Cgs based on the second molding conditions are obtained, and a conversion process, including at least conversion of a set temperature, is performed for the second molding conditions by a predetermined conversion means such that the second melting property Prs, Pgs approximates the basic melting property Pro, Pgo.

A molding optimization device 1 for an injection molding machine M according to the present invention, which has solved the above-described problem, is a molding optimization device for the injection molding machine M which optimizes molding conditions for producing a molded product by injecting and charging a plasticized molten resin into a die 2 by a screw 3. The molding optimization device 1 is characterized by comprising a molding machine controller 4 in which an optimization processing section 5 is provided. The optimization processing section 5 comprises:

a basic molding condition setting functional section Ff which sets basic molding conditions for an initial resin material Cro, Cgo used at the beginning of production of a predetermined molded product;

a basic melting property calculation functional section Fp which obtains a basic melting property Pro, Pgo related to a molten state of the initial resin material Cro, Cgo based on the basic molding conditions;

a second molding condition setting functional section Fs which sets second molding conditions for an additional resin material Crs, Cgs to which the initial resin material Cro, Cgo is switched to continue production of the molded product;

a second melting property calculation functional section Fq which obtains a second melting property Prs, Pgs related to a molten state of the additional resin material Crs, Cgs based on the second molding conditions; and

a molding condition conversion functional section Fc which performs a conversion process, including at least conversion of a set temperature, for the second molding conditions by a predetermined conversion means such that the second melting property Prs, Pgs approximates the basic melting property Pro, Pgo.

In preferred modes of the present invention, at least a basic solid phase rate property showing change in solid phase rate with screw position may be included in the basic melting property Pro, Pgo, and at least a second solid phase rate property showing change in solid phase rate with screw position may be included in the second melting property Prs, Pgs. Therefore, the optimization processing section 5 may include a basic melting property calculation functional section Fp which obtains, as the basic melting property Pro, Pgo, at least a basic solid phase rate property showing change in solid phase rate with screw position, and a second melting property calculation functional section Fq which obtains, as the second melting property Prs, Pgs, at least a second solid phase rate property showing change in solid phase rate with screw position. At that time, the basic solid phase rate property may be represented by estimated solid phase rates of molten resin corresponding to screw positions, the estimated solid phase rates being obtained by a computation process based on physical property value data Dc related to the initial resin material Cro, Cgo and solid phase rate calculation expression data Dm. In addition, the second solid phase rate property may be represented by estimated solid phase rates of molten resin corresponding to screw positions, the estimated solid phase rates being obtained by a computation process based on physical property value data Dc related to the additional resin material Crs, Cgs and the solid phase rate calculation expression data Dm. Therefore, the molding machine controller 4 may include a solid phase rate calculation section Fx which obtains, as the basic solid phase rate property, estimated solid phase rates of molten resin corresponding to screw positions by the computation process based on the physical property value data Dc related to the initial resin material Cro, Cgo and the solid phase rate calculation expression data Dm, and obtains, as the second solid phase rate property, estimated solid phase rates of molten resin corresponding to screw positions by the computation process based on the physical property value data Dc related to the additional resin material Crs, Cgs and the solid phase rate calculation expression data Dm. In addition, the molding machine controller 4 may include a display 4d having a graphic display section Vsg for graphically displaying the basic melting property Pro, Pgo and the second melting property Prs, Pgs. Moreover, in addition to the basic solid phase rate property, one or more conditions selected from screw rotational speed, back pressure, and cycle time for which respective constraints are set may be included in the basic melting property Pro, Pgo, and, in addition to the second solid phase rate property, one or more conditions selected from screw rotational speed, back pressure, and cycle time for which respective constraints are set may be included in the second melting property Prs, Pgs. Notably, changing of the production lot of the resin material and/or changing of the grade of the resin material may be included in the condition for switching from the initial resin material Cro, Cgo to the additional resin material Crs, Cgs.

**Effects of the Invention**

The molding optimization method and the molding optimization device 1 for the injection molding machine M according to the invention achieve the following remarkable effects.
(1) When the molding optimization method is performed, the basic molding conditions for the initial resin material Cro, Cgo used at the beginning of production of the predetermined molded product, and the basic melting property Pro, Pgo related to the molten state of the initial resin material Cro, Cgo based on the basic molding conditions are obtained beforehand. When the additional resin material Crs, Cgs to which the initial resin material Cro, Cgo is switched to continue the production of the molded product is used, the second molding conditions for the additional resin material Crs, Cgs, and the second melting property Prs, Pgs related to the molten state of the additional resin material Crs, Cgs based on the second molding conditions are obtained, and the conversion process, including at least conversion of a set temperature, is performed for the second molding conditions by a predetermined conversion means such that the second melting property Prs, Pgs approximates the basic melting property Pro, Pgo. Therefore, for example, when a new resin material of a different production lot is added during production of the predetermined molded product, an operator is not required to reset the molding conditions in, so to speak, a cause unknown state. Therefore, it is possible to enhance production efficiency and reduce the number of defective products. In addition, even in the case where the resin material is changed, it is possible to secure the same molded product, thereby improving uniformity and quality. Thus, it is possible to reliably perform optimization from the relative viewpoint; namely, optimization for coping with, for example, changing of the production lot or grade of the resin material.

(2) The molding optimization device 1 includes the molding machine controller 4 in which the optimization processing section 5 is provided. The optimization processing section 5 includes the basic molding condition setting functional section Ff, the basic melting property calculation functional section Fp, the second molding condition setting functional section Fs, the second melting property calculation functional section Fq, and the molding condition conversion functional section Fc which performs the conversion process, including at least conversion of a set temperature, for the second molding conditions by a predetermined conversion means so that the second melting property Prs, Pgs approximates the basic melting property Pro, Pgo. Therefore, it is possible to easily and reliably perform the molding optimization method in the injection molding machine M.

(3) In a preferred mode in which at least a basic solid phase rate property showing change in solid phase rate with screw position is included in the basic melting property Pro, Pgo, and at least a second solid phase rate property showing change in solid phase rate with screw position is included in the second melting property Prs, Pgs, since the molten state of the resin material, in particular, the solid phase rate related directly to viscosity can be used, it is possible to more accurately obtain a piece of information regarding the molten state.

(4) In a preferred mode in which the optimization processing section 5 includes the basic melting property calculation functional section Fp which obtains, as the basic melting property Pro, Pgo, at least a basic solid phase rate property showing change in solid phase rate with screw position, and the second melting property calculation functional section Fq which obtains, as the second melting property Prs, Pgs, at least a second solid phase rate property showing change in solid phase rate with screw position, it is possible to easily obtain the piece of information (data) related to the molten state of the resin material by utilizing the molding machine controller 4.

(5) In a preferred mode in which the basic solid phase rate property is represented by estimated solid phase rates of molten resin corresponding to screw positions, the estimated solid phase rates being obtained by the computation process based on the physical property value data Dc related to the initial resin material Cro, Cgo and the solid phase rate calculation expression data Dm, and the second solid phase rate property is represented by estimated solid phase rates of molten resin corresponding to screw positions, the estimated solid phase rates being obtained by a computation process based on the physical property value data Dc related to the additional resin material Crs, Cgs and the solid phase rate calculation expression data Dm, it is possible to reliably perform determination of the solid phase rate properties by utilizing, for example, the proposed molding support apparatus (JP2020-1183A), and to obtain a piece of accurate information (data) regarding the molten state of the resin material as numerical values.

(6) In a preferred mode in which the molding machine controller 4 includes the solid phase rate calculation section Fx which obtains, as the basic solid phase rate property, estimated solid phase rates of molten resin corresponding to screw positions by the computation process based on the physical property value data Dc related to the initial resin material Cro, Cgo and the solid phase rate calculation expression data Dm, and obtains, as the second solid phase rate property, estimated solid phase rates of molten resin corresponding to screw positions by the computation process based on the physical property value data Dc related to the additional resin material Crs, Cgs and the solid phase rate calculation expression data Dm, since the proposed molding support apparatus or the like can be utilized, it is possible to easily and reliably determine the solid phase rate properties by utilizing the molding machine controller 4.

(7) In a preferred mode in which the molding machine controller 4 includes the display 4d having the graphic display section Vsg for graphically displaying the basic melting property Pro, Pgo and the second melting property Prs, Pgs, since the operator can more reliably check, by the graphic display, the state in which different resin materials are used, it is possible to enhance the easiness and reliability of implementation from the viewpoint of optimization.

(8) In a preferred mode in which, in addition to the basic solid phase rate property, one or more conditions selected from screw rotational speed, back pressure, and cycle time for which respective constraints are set are included in the basic melting property Pro, Pgo, and, in addition to the second solid phase rate property, one or more conditions selected from screw rotational speed, back pressure, and cycle time for which respective constraints are set are included in the second melting property Prs, Pgs, from the viewpoint of unification of the molding conditions, it is possible to further enhance the effects, for example, enable accurate unification.

(9) In a preferred mode in which changing of the production lot of the resin material and/or changing of the grade of the resin material is included in the condition for switching from the initial resin material Cro, Cgo to the additional resin material Crs, Cgs, since it is possible to cover almost all of the problems that occur during actual production, the molding optimization method (molding optimization device 1) according to the present invention can be used most effectively from the viewpoint of solving the problems.

**Brief Description of the Drawings**

[Fig. 1] Diagram showing a setting screen of a display in a molding optimization device according to a preferred embodiment of the present invention.

[Fig. 2] Diagram showing the mechanical structure of an injection molding machine having the molding optimization device.

[Fig. 3] Block diagram of a processing system (control system) in the molding optimization device.

[Fig. 4] Flowchart showing the processing steps of a molding optimization method according to the preferred embodiment of the present invention.

[Fig. 5] Step flowchart specifically showing a portion of the flowchart shown in Fig. 4.

[Fig. 6] Table showing physical property values of resin materials of different production lots used in performance of the molding optimization method.

[Fig. 7] Table showing set temperatures for the resin materials of different production lots used in performance of the molding optimization method.

[Fig. 8] Characteristic graph (graphic display diagram) showing change in estimated solid phase rate with screw position, which is used in performance of the molding optimization method.

[Fig. 9] Graph showing the relation between the number of shots and bar-flow flow length, which is used for describing the action and effect attained when the molding optimization method is performed.

[Fig. 10] Table showing physical property values of resin materials of different grades used in performance of the molding optimization method.

[Fig. 11a] Table showing set temperatures for the resin materials of different grades used in performance of the molding optimization method.

[Fig. 11b] Table showing molding conditions for the resin materials of different grades used in performance of the molding optimization method.

[Fig. 12] Characteristic graph showing change in specific heat with temperature for the resin materials of different grades used in performance of the molding optimization method.

[Fig. 13] Graph showing the relation between the number of shots and bar-flow flow length, which is used for describing the action and effect attained when the molding optimization method is performed by using the resin materials of Fig. 12.

### Description of Reference Numerals

1: molding optimization device, 2: die, 3: screw, 4: molding machine controller, 4d: display, 5: optimization processing section, M: injection molding machine, Cro: initial resin material, Cgo: initial resin material, Crs: additional resin material, Cgs: additional resin material, Dc: physical property value data, Dm: solid phase rate calculation expression data, Ff: basic molding condition setting functional section, Fp: basic melting property calculation functional section, Fs: second molding condition setting functional section, Fq: second melting property calculation functional section, Fc: molding condition conversion functional section, Fx: solid phase rate calculation section, Pro: basic melting property, Pgo: basic melting property, Prs: second melting property, Pgs: second melting property, Vsg: graphic display section

### Best Mode for Carrying Out the Invention

Next, the best embodiment of the present invention will be described in detail based on the drawings.

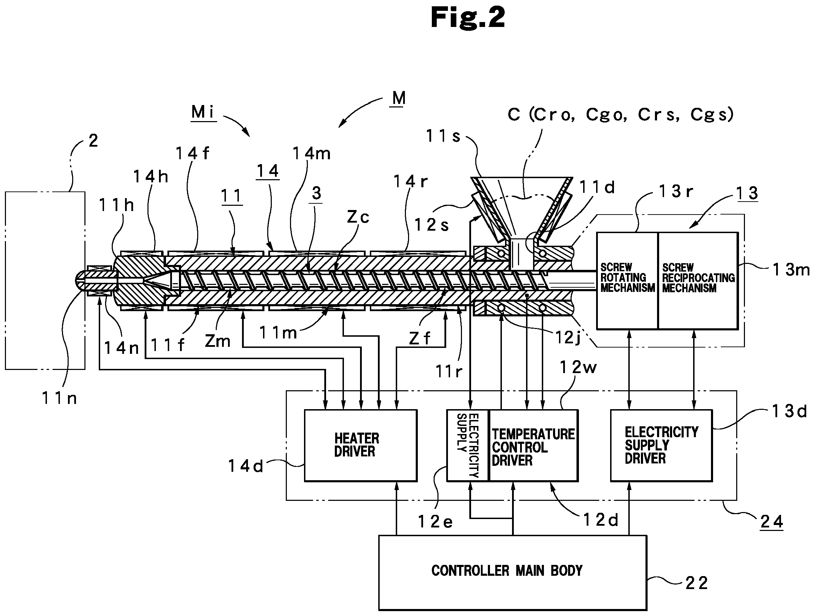

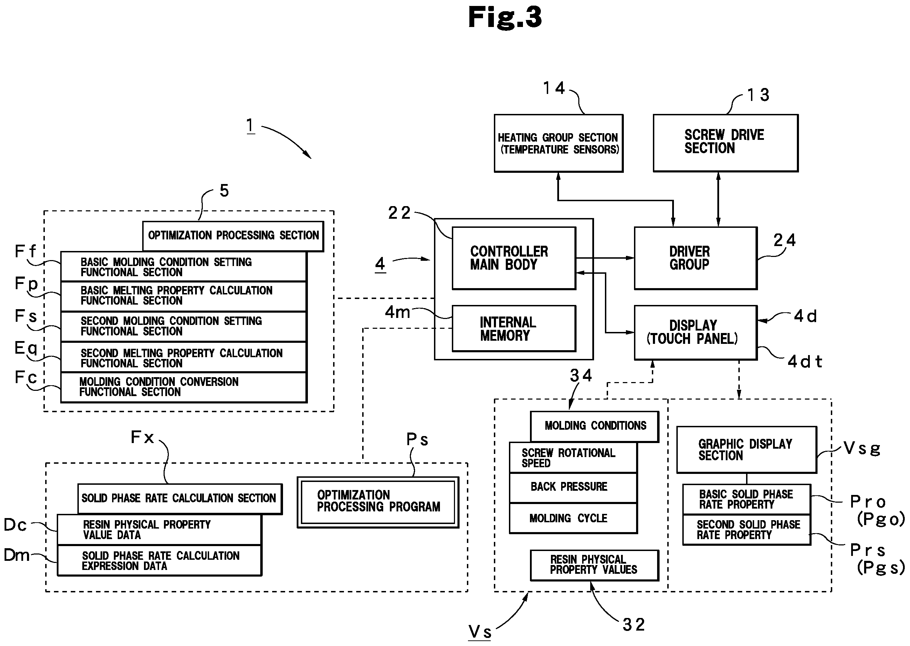

First, in order to facilitate understanding of a molding optimization device 1 according to the present embodiment, the outline of an injection molding machine M which can use the device 1 will be described with reference to Figs. 2 and 3.

Fig. 2 shows the injection molding machine M; in particular, an injection machine Mi from which a mold clamping device is omitted. In the injection machine Mi, a heating cylinder is denoted by reference numeral 11. A nozzle 11n is attached to a forward end portion of the heating cylinder 11 via a head portion 11h. The nozzle 11n has a function of injecting a molten resin within the heating cylinder 11 into a die 2, which is indicated by an imaginary line. A hopper 11s is provided in an upper portion of the rear end of the heating cylinder 11. A material drop port 11d penetrating the heating cylinder 11 is formed between a lower end opening of the hopper 11s and the interior of the heating cylinder 11. As a result, the hopper 11s communicates with the interior of the heating cylinder 11 through the material drop port 11d, and a resin material C indicated by an imaginary line within the hopper 11s is supplied to the interior of the heating cylinder 11 through the material drop port 11d.

A heater 12s for heating the resin material C stored in the hopper 11s is attached to an outer circumferential surface of the hopper 11s, and a water jacket 12j is formed in the heating cylinder 11 to be located around the material drop port 11d. The heater 12s is connected to an electricity supply circuit 12e in a temperature control driver 12d, and the water jacket 12j is connected to a temperature control water circulation circuit 12w in the temperature control driver 12d. The temperature control water circulation circuit 12w can cause a temperature-controlled water medium (hot water or cooling water) to circulate through the water jacket 12j, thereby controlling the temperature of (heating or cooling) the resin material C passing through the material drop port 11d. The electricity supply circuit 12e and the temperature control water circulation circuit 12w are connected to a controller main body 22. Thus, control instructions for the electricity supply circuit 12e and the temperature control water circulation circuit 12w are given from the controller main body 22 to the temperature control driver 12d. Also, the controlled temperature is detected by a temperatures sensor and its detection signal is given to the temperature control driver 12d.

A screw 3 is disposed in the heating cylinder 11 in such a manner that the screw 3 can rotate and can move forward and backward. Notably, the screw surface is coated with a predetermined surface material (metal) in consideration of durability, etc. The screw 3 has a metering zone Zm, a compression zone Zc, and a feed zone Zf, which are arranged in this order from a forward side toward a rearward side. A rear end portion of the screw 3 is coupled with a screw drive section 13. The screw drive section 13 includes a screw rotating mechanism 13r for rotating the screw 3 and a screw reciprocating mechanism 13m for advancing and retracting the screw 3. In the illustrated example, a system for driving the screw rotating mechanism 13r and the screw reciprocating mechanism 13m is an electrical system in which electric motors are used for driving them. However, the driving system may be a hydraulic system in which a hydraulic circuit is used for driving them, and no limitation is imposed on the drive system. The screw rotating mechanism 13r and the screw reciprocating mechanism 13m are connected to an electricity supply driver 13d, and the electricity supply driver 13d is connected to the controller main body 22. Thus, control instructions for the screw rotating mechanism 13r and the screw reciprocating mechanism 13m are given from the controller main body 22 to the electricity supply driver 13d. Physical quantities such as the speed and position of the screw 3 are detected by a speed sensor, a position sensor, etc., which are not illustrated in the drawing, and their detection signals are given to the electricity supply driver 13d.

The heating cylinder 11 has a heating cylinder forward portion 11f, a heating cylinder middle portion 11m, and a heating cylinder rear portion 11r, which are arranged in this order from the forward side toward the rearward side. A forward portion heating section 14f, a middle portion heating section 14m, and a rear portion heating section 14r are respectively provided on the outer circumferential surfaces of the portions 11f, 11m, and 11r. Similarly, a head heating section 14h is provided on the outer circumferential surface of the head portion 11h, and a nozzle heating section 14n is provided on the outer circumferential surface of the nozzle 11n. Each of these heating sections 14f, 14m, 14r, 14h, and 14n can be composed of a band heater or the like. The nozzle heating section 14n, the head heating section 14h, the forward portion heating section 14f, the middle portion heating section 14m, and the rear portion heating section 14r constitute a heating group section 14. This heating group section 14 is connected to a heater driver 14d, and the heater driver 14d is connected to the controller main body 22. Thus, control instructions for the respective heating sections 14f, 14m, 14r, 14h, and 14n are given from the controller main body 22 to the heater driver 14d. Their heating temperatures are detected by unillustrated temperatures sensors (thermocouples, etc.) and their detection signals are given to the heater driver 14d.

Fig. 3 shows a molding machine controller 4 which controls the entirety of the injection molding machine M. The molding machine controller 4 includes the above-described controller main body 22 and a display 4d connected to the controller main body 22. The controller main body 22 includes pieces of hardware such as a CPU and an internal memory 4n and provides a computer function. The display 4d can perform necessary information display, and a touch panel 4dt is added thereto. By using this touch panel 4dt, an operator can perform various types of input operations such as inputting, setting, and selection. Also, a driver group 24 for driving (activating) various types of actuators is connected to the controller main body 22. This driver group 24 includes the above-described temperature control driver 12d, including the electricity supply circuit 12e and the temperature control water circulation circuit 12w, the above-described electricity supply driver 13d, and the above-described heater driver 14d, which are shown in Fig. 2.

Accordingly, the molding machine controller 4 includes an HMI control system and a PLC control system, and a PLC program and an HMI program are stored in the internal memory 4m. Sequence operations of the injection molding machine M in various steps, monitoring of the injection molding machine M, etc. are executed by the PLC program. Setting and display of operation parameters of the injection molding machine M, display of operation monitor data of the injection molding machine M, etc. are executed by the HMI program.

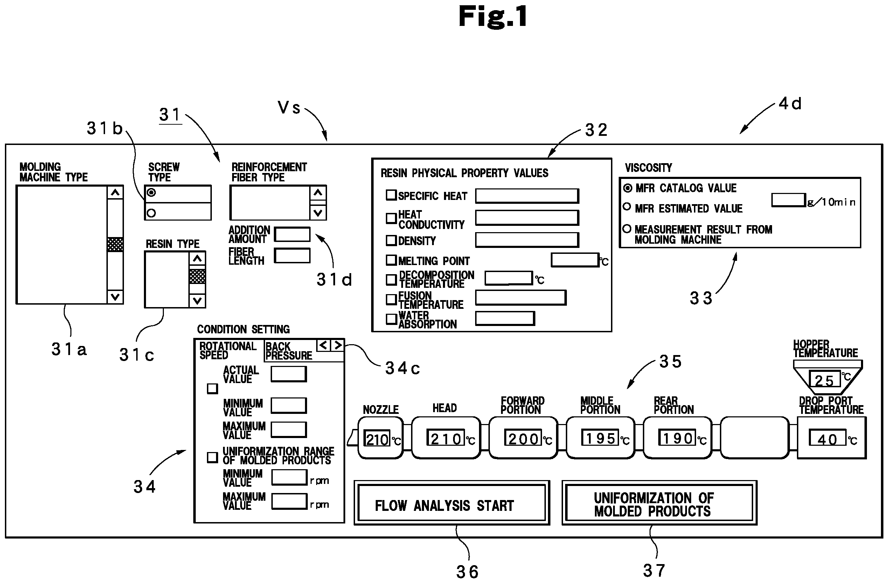

Next, the configuration of the molding optimization device 1 according to the present embodiment, which can be used for such an injection molding machine M, will be described with reference to Figs. 1 to 3 and Figs. 6 to 9.

The molding optimization device 1 according to the present embodiment is configured by the molding machine controller 4 shown in Fig. 3 and peripheral actuators including the display 4d. Therefore, an optimization processing program (application program) Ps for functioning the molding optimization device 1 is stored in the internal memory 4m of the molding machine controller 4.

The molding optimization device 1 basically includes an optimization processing section 5 which is realized by the computer function of the molding machine controller 4; namely, functions as a result of execution of the optimization processing program Ps. Thus, the molding optimization device 1 can optimize the molding conditions at the time of production of a predetermined molded product by the injection molding machine M.

Namely, during production of the predetermined molded product, the residual amount of the resin material C currently used decreases, and a new resin material C is added (for replenishment) to the hopper 11s. In such a case, it is not uncommon that the viscosity, etc. change because the production lot (production timing) of the added resin material C differs from that of the initial resin material C, and the number of defective molded products increases. In such a case, the physical property values of the added resin material C frequently differ slightly from those of the initial resin material C. However, it is not easy to grasp the kinds of the physical property values and the degrees of differences in physical property values between the resin materials, and how all the differences affect the number of defective molded products as a whole. In view of the above, when a resin material C whose production lot differs from that of the initial resin material C is added, the molding optimization device 1 allows a beginner or the like to easily reset the molding conditions and optimize them.

Therefore, as shown in Fig. 3, a basic molding condition setting functional section Ff, a basic melting property calculation functional section Fp, a second molding condition setting functional section Fs, a second melting property calculation functional section Fq, and a molding condition conversion functional section Fc are provided, as basic configurational elements, in the optimization processing section 5, which constitutes a main portion of the molding optimization device 1. The basic molding condition setting functional section Ff sets basic molding conditions for an initial resin material Cro which is used at the beginning of production of a predetermined molded product. The basic melting property calculation functional section Fp obtains the basic melting property Pro related to the molten state of the initial resin material Cro on the basis of the basic molding conditions. The second molding condition setting functional section Fs sets second molding conditions for an additional resin material Crs to which the initial resin material Cro is switched to continue the production of the molded product. The second melting property calculation functional section Fq obtains the second melting property Prs related to the molten state of the additional resin material Crs on the basis of the second molding conditions. The molding condition conversion functional section Fc performs a conversion process, including at least conversion of a set temperature, for the second molding conditions by a predetermined conversion means such that the second melting property Prs approximates the basic melting property Pro (including the case where the second melting property Prs become the same as the basic melting property Pro). A solid phase rate calculation section Fx is provided in the molding machine controller 4.

In this case, at least a basic property showing change in solid phase rate with screw position (hereinafter referred to as the basic solid phase rate property) may be included in the basic melting property Pro related to the molten state of the initial resin material Cro. In addition, at least a second property showing change in solid phase rate with screw position (hereinafter referred to as the second solid phase rate property) may be included in the second melting property Prs related to the molten state of the additional resin material Crs. In the case where, as described above, the basic solid phase rate property is included in the basic melting property Pro and the second solid phase rate property is included in the second melting property Prs, since the molten state of the resin material, in particular, its solid phase rate related directly to viscosity can be used, a piece of information related to the molten state can be obtained more accurately.

Accordingly, the basic melting property calculation functional section Fp in the above-described optimization processing section 5 has a function of obtaining, as the basic melting property Pro, at least a basic solid phase rate property showing change in solid phase rate with screw position, and the second melting property calculation functional section Fq has a function of obtaining, as the second melting property Prs, at least a second solid phase rate property showing change in solid phase rate with screw position. When the basic solid phase rate property and the second solid phase rate property as described above are utilized, the piece of information (data) related to the molten state of the resin material can be obtained easily by using the molding machine controller 4.

In particular, the solid phase rate calculation section Fx is provided in the molding optimization device 1 according to the present embodiment. Therefore, by using the molding support device proposed by the present applicant (JP2020-1183A); i.e., an estimated solid phase rate that can be obtained by an estimation means, it is possible to easily and reliably perform the determination of the solid phase rate properties by using the molding machine controller 4 and to obtain a piece of accurate information (data) related to the molten state of the resin material as numerical values.

Therefore, the basic solid phase rate property Pro and the second solid phase rate property Prs can be obtained by the solid phase rate calculation section Fx. Specifically, it is possible to obtain the basic solid phase rate property Pro which shows change in solid phase rate of the molten resin with screw position and which uses the estimated solid phase rate obtained by a computation process based on the physical property value data Dc related to the initial resin material Cro and the solid phase rate calculation expression data Dm. Similarly, it is possible to obtain the second solid phase rate property Prs which shows change in solid phase rate of the molten resin with screw position and which uses the estimated solid phase rate obtained by a computation process based on the physical property value data Dc related to the additional resin material Crs and the solid phase rate calculation expression data Dm. As described above, by using the proposed molding support device, etc., it is possible obtain a piece of accurate information (data) related to the molten state of the resin material as numerical values and to reliably determine the solid phase rate properties.

Fig. 1 shows a setting screen Vs which is displayed on the display 4d connected to the controller main body 22 in the molding machine controller 4 and which is used for the molding optimization device 1.

As shown in Fig. 1, the setting screen Vs has a molding machine/resin setting column 31 in a left upper portion, a resin physical property value setting column 32 in a center upper portion, a viscosity setting column 33 in a right upper portion, a condition setting column 34 in a left side region of a lower portion, and a temperature setting column 35 extending from a central region of the lower portion to a right side region of the lower portion. A "flow analysis start" key 36 and a "molded product uniformization" key 37 are disposed on the lower side of the temperature setting column 35. The molding machine/resin setting column 31 has a molding machine type setting section 31a, a screw type setting section 31b, a resin type setting section 31c, and a reinforcement fiber type setting section 31d. The resin physical property value setting column 32 has input sections for inputting various specific physical property values such as specific heat, heat conductivity, density, melting point, decomposition temperature, fusion temperature, water absorption, etc. The condition setting column 34 has setting sections for setting conditions, including constraints related to screw rotational speed, back pressure, cycle time, etc., and the display can be switched by a switching arrow key 34c.

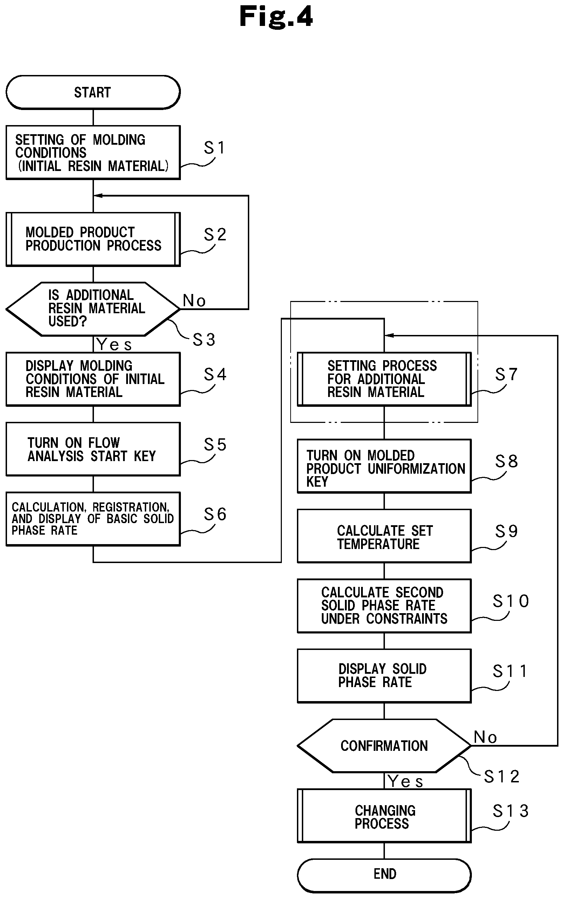

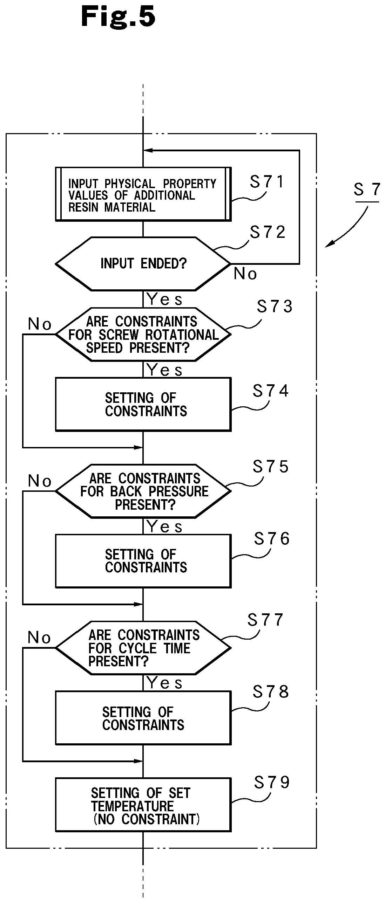

Next, the molding optimization method according to the present embodiment, including the functions of the molding optimization device 1, will be described in accordance with the flowchart shown in Fig. 4, including the step flowchart shown in Fig. 5, and with reference to the drawings.

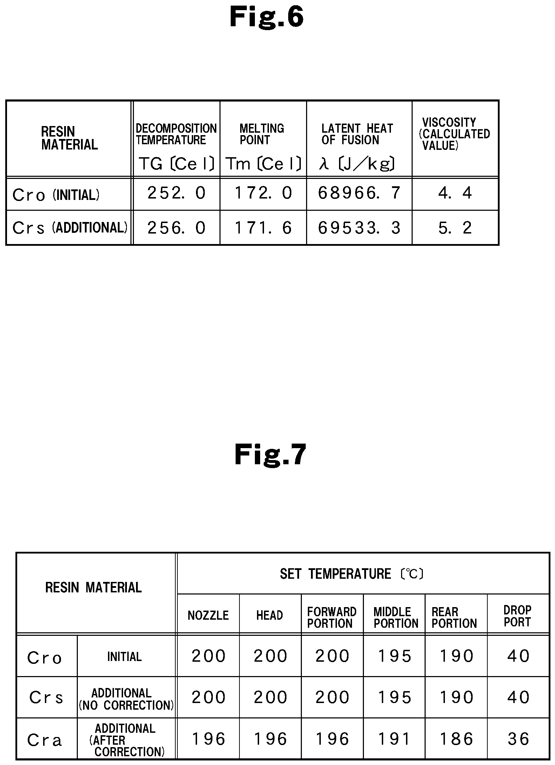

First, since verification was performed to confirm the effectiveness of the molding optimization method according to the present embodiment, the verification results will first be described with reference to Figs. 6 to 9.

In the verification test, pellets of polystyrene resin (GPPS) were used as resin material C. An initial resin material used at the beginning was referred to as a sample Cro, and an additional resin material used additionally was referred to as a sample Crs. Therefore, the initial resin material Cro and the additional resin material Crs are the same resin material although their production lots differ from each other.

For the verification test, necessary setting for the initial resin material Cro and the additional resin material Crs is performed by using the setting screen Vs shown in Fig. 1. In this case, in relation to the molding optimization method according to the present embodiment, various physical property values (decomposition temperature, etc.) shown in Fig. 6 are inputted (set) by using the resin physical property value setting column 32. Fig. 6 shows the respective physical property values of the initial resin material Cro and the additional resin material Crs. The physical property values of each resin material are actually measured values of decomposition temperature TG [Cel], melting point Tm [Cel], and latent heat of fusion $\lambda$ [J/kg]. Fig. 6 also shows viscosity (calculated value) based on the measured values. As is apparent from Fig. 6, the viscosity of the initial resin material Cro is 4.4 [g/10min] and the viscosity of the additional resin material Crs is 5.2 [g/10min] because their production lots differ from each other, and it can be confirmed that the flowability of the additional resin material Crs is higher.

Also, the set temperatures of respective portions shown in Fig. 7 are set by using the temperature setting column 35. In this case, for the initial resin material Cro, temperature setting is performed in accordance with an ordinary molding condition setting rule, and for the additional resin material Crs, the set temperatures for the initial resin material Cro are applied as they are; i.e., without correcting them.

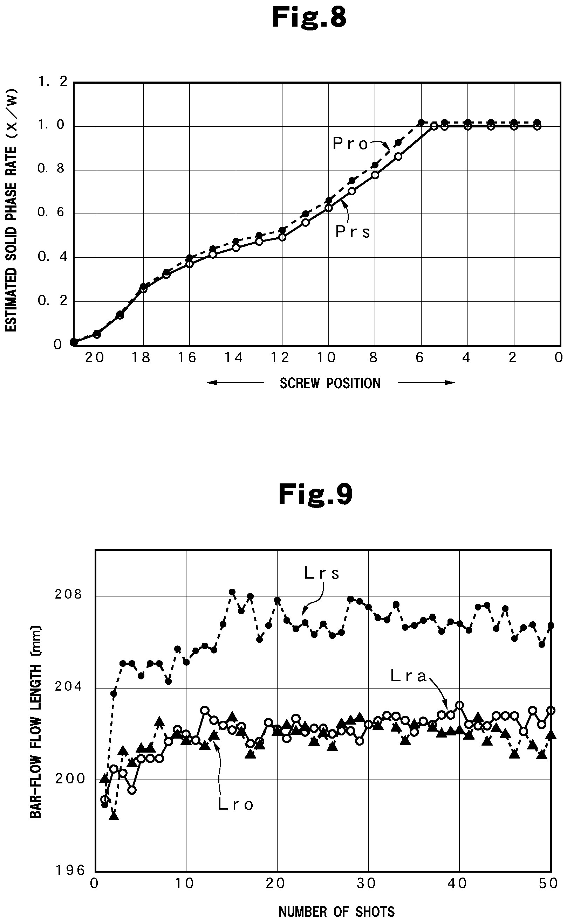

When the above-described input process for the setting screen Vs is completed, an operator turns on the "flow analysis start" key 36 on the setting screen Vs. As a result, a characteristic graph shown in Fig. 8, which shows change in estimated solid phase rate with screw position (pitch number), can be obtained. As described above, the "estimated solid phase rate" at each screw position is computed by the estimation means disclosed in the molding support device described in JP2020-1183A; i.e., the solid phase rate calculation section Fx according to the present embodiment. It is possible to find from Fig. 8, the estimated solid phase rate of the additional resin material Crs is slightly smaller than the estimated solid phase rate of the initial resin material Cro.

The estimated solid phase rate quantitatively indicates the molten state (the manner of melting) of the resin material. Therefore, if the estimated solid phase rate changing property of the additional resin material Crs, which corresponds to the second melting property Prs, can be made coincident with (equal to) the estimated solid phase rate changing property of the initial resin material Cro, which corresponds to the basic melting property Pro, by correcting the molding conditions (the set temperature, etc.), the above-described resin materials can have the same viscosity.

This conversion process is executed by the molding condition conversion functional section Fc. Namely, the molding condition conversion functional section Fc performs a conversion process, including at least conversion of a set temperature, for the second molding conditions by a predetermined conversion means such that the second melting property Prs related to the molten state of the additional resin material Crs, obtained by the second melting property calculation functional section Fq, approximates the basic melting property Pro related to the molten state of the initial resin material Cro, obtained by the basic melting property calculation functional section Fp, (including the case where the second melting property Prs becomes the same as the basic melting property Pro).

The method of the conversion process involves a process of computing the set temperature, the screw rotational speed, the back pressure, the cycle time, etc. by various mathematical methods. Various mathematical methods such as design of experiments, Lagrange's method of undetermined multipliers, Gauss-Jordan method, Newton's method, and first-order imputation can be used, but in the present embodiment, the conversion process was performed using Lagrange's method of undetermined multipliers.

Below, a specific conversion method will be described. First, the difference between the estimated solid phase rate of the initial resin material Cro and the estimated solid phase rate of the additional resin material Crs calculated under constraints is represented by $f\alpha$ and is applied to [Mathematical Expression 1], whereby a polynomial is obtained.

[Mathematical Expression 1]

$$f_{\alpha} \cong a\ x_{\alpha}^{2} + b\ x_{\alpha} + c$$

In the approximation expression of the quadratic polynomial of [Mathematical Expression 1], the error is determined by [Mathematical Expression 2].

[Mathematical Expression 2]

$$J = \frac{1}{2}\sum_{\alpha=1}^{N} ( f_\alpha - ( a\, x_\alpha^2 + b\, x_\alpha + c ) ) \rightarrow \min$$

For this, the partial derivatives of a, b, and c need to be 0. Therefore, the partial derivative of a is represented by [Mathematical Expression 3].

[Mathematical Expression 3]

$$\frac{\partial J}{\partial a} = \sum_{\alpha=1}^{N} ( f_\alpha - a\, x_\alpha^2 - b\, x_\alpha - c )\ ( - x_\alpha^2 )$$

$$= a\sum_{\alpha=1}^{N} x_\alpha^4 + b\sum_{\alpha=1}^{N} x_\alpha^3 + c\sum_{\alpha=1}^{N} x_\alpha^2 - \sum_{\alpha=1}^{N} x_\alpha^2 f_\alpha$$

Similarly, for b and c, partial derivative is performed, whereby the normal equation of [Mathematical Expression 4] can be obtained.

[Mathematical Expression 4]

$$\begin{pmatrix} \sum\limits_{\alpha=1}^{N} x_\alpha^4 & \sum\limits_{\alpha=1}^{N} x_\alpha^3 & \sum\limits_{\alpha=1}^{N} x_\alpha^2 \\[2ex] \sum\limits_{\alpha=1}^{N} x_\alpha^3 & \sum\limits_{\alpha=1}^{N} x_\alpha^2 & \sum\limits_{\alpha=1}^{N} x_\alpha \\[2ex] \sum\limits_{\alpha=1}^{N} x_\alpha^2 & \sum\limits_{\alpha=1}^{N} x_\alpha & \sum\limits_{\alpha=1}^{N} 1 \end{pmatrix} \begin{pmatrix} a \\[2ex] b \\[2ex] c \end{pmatrix} = \begin{pmatrix} \sum\limits_{\alpha=1}^{N} x_\alpha^2 f_\alpha \\[2ex] \sum\limits_{\alpha=1}^{N} x_\alpha f_\alpha \\[2ex] \sum\limits_{\alpha=1}^{N} y_\alpha \end{pmatrix}$$

After finding the solutions of a, b, and c, the approximate equation is obtained as f ≈ fa. After obtaining this approximate equation, the optimal solution is calculated for the constraint g of each set condition using the Lagrange's method of undetermined multipliers of [Mathematical Expression 5].

[Mathematical Expression 5]

$$\nabla f = \lambda \nabla g$$

If the optimal value obtained by the quadratic function exceeds constraints, it is also possible to calculate the optimal value by judging it as a linear function.

The above-described conversion process (computation process) can be executed by turning on the "molded product uniformization" key 37 on the setting screen Vs.

In the row of Cra shown in Fig. 7, there are shown set temperatures obtained as a result of the conversion process performed by the molding condition conversion functional section Fc; namely, set temperatures for the additional resin material Crs which have been corrected by the conversion process.

As is apparent from Figs. 7 and 8, the uncorrected estimated solid phase rate of the additional resin material Crs is slightly lower than the estimated solid phase rate of the initial resin material Cro; namely, the additional resin material Crs was in a state in which it melts more easily than the initial resin material Cro. The corrected (converted) set temperatures for the additional resin material Crs were set, as a while, to be 4[°C] lower than the set temperatures for the initial resin material Cro.

Fig. 9 shows the bar-flow flow length [mm] measured by a bar-flow flow length measurement device for the case where molding was performed at the set temperatures shown in Fig. 7. Lro shows the bar-flow flow length in the case where the initial resin material Cro was used, Lrs shows the bar-flow flow length in the case where the additional resin material Crs was used without correction of molding conditions, and Lra shows the bar-flow flow length in the case of the additional resin material Cra (Fig. 7) whose molding conditions were corrected (optimized). Notably, the bar-flow flow length measurement device uses a die having an elongated cavity formed therein, and the lower the viscosity of the molten resin, the longer the flow length.

As is apparent from Fig. 9, the flow length Lrs of the additional resin material Crs whose molding conditions were not corrected tended to become about 4 to 5 [mm] longer than the flow length Lro of the initial resin material Cro. In contrast, the flow length Lra of the additional resin material Cra whose molding conditions were corrected (optimized) was approximately equal to the flow length Lro of the initial resin material Cro. Thus, it was confirmed that the molding optimization device 1 (the molding optimization method) according to the present embodiment is highly effective. In particular, in the case of the illustrated example, only the set temperatures was changed, and it was confirmed that a sufficient degree of effectiveness is attained even when only the set temperatures were corrected (converted).

Next, the molding optimization method during actual production will be described with reference to Figs. 4 and 5.

First, for production of molded products, an operator performs a process of setting molding conditions in the injection molding machine M in accordance with an ordinary setting procedure (step S1). Namely, the molding condition setting process can be performed by the basic molding condition setting functional section Ff, and the set molding conditions are registered. After completion of the setting process, the operator perform a production process in accordance with an ordinary procedure (step S2).

Here, there is assumed the case where the remaining amount of the resin material C (the initial resin material Cro) decreases as the molded product production process progresses, and the timing of adding the resin material C (the additional resin material Crs) has come (step S3). Notably, although the production lot of the additional resin material Crs differs from the production lot of the initial resin material Cro, the initial resin material Cro and the additional resin material Crs are of the same resin material type.

First, the operator displays the setting screen Vs shown in Fig. 1, thereby displaying the molding conditions for the initial resin material Cro (step S4). At that time, data related to the molding conditions having already been set are read out. In the case where there are insufficient data necessary for obtaining the estimated solid phase rate of the initial resin material Cro, the operator inputs the necessary data. Upon completion of the necessary input, the operator turns on the "flow analysis start" key 36 on the setting screen Vs (step S5).

As a result, the estimated solid phase rate of the molten resin is obtained by the solid phase rate calculation section Fx through the computation process based on the physical property value data Dc related to the initial resin material Cro and the solid phase rate calculation expression data Dm, and the basic solid phase rate property Pro which uses estimated solid phase rates of molten resin corresponding to screw positions (pitch numbers) can be obtained by the basic melting property calculation functional section Fp. This basic solid phase rate property; namely, the basic melting property (Pro), is registered as data, and is graphically displayed by the graphic display section Vsg of the display 4d as shown in Fig. 6 (step S6).

Next, the operator inputs (sets) various types of pieces of information related to the additional resin material Crs on the setting screen Vs (step S7). This specific input process is shown in Fig. 5. In this case, the production lot of the additional resin material Crs differs from the production lot of the initial resin material Cro, the operator inputs (sets) various physical property values (decomposition temperature, etc.) related to the additional resin material Crs by using the resin physical property value setting column 32 (step S71). In the case where the inputting of data into the resin physical property value setting column 32 ends and constraints for specific molding conditions are set, the operator sets the constraints by using the condition setting column 34 (steps S72, S73, etc.).

Namely, when constraints for screw rotational speed are to be set, the operator selects a "screw rotational speed" tab of the condition setting column 34 and sets constraints related to the maximum and minimum values for optimization (steps S73 and S74). Also, when constraints for back pressure are to be set, the operator selects a "back pressure" tab of the condition setting column 34 and sets constraints related to the maximum and minimum values for optimization (steps S75 and S76). Moreover, when constraints for cycle time are to be set, the operator selects a "cycle time" tab of the condition setting column 34 and sets constraints related to the maximum and minimum values for optimization (steps S77 and S78). After completion of setting of constraints, the operator sets uncorrected set temperatures without setting constraints (step S79). The setting related to the additional resin material Crs is performed by the second molding condition setting functional section Ff.

In the case, as described above, in addition to the second solid phase rate property, one or more conditions selected from screw rotational speed, back pressure, and cycle time and having respective constraints set therefor are included in the second melting property Prs, from the viewpoint of rendering molding conditions for the additional resin material Crs the same as those for the initial resin material Cro, it is possible to further enhance the effect (e.g., more accurate uniformization becomes possible). Notably, although the second melting property Prs has been described, when the above-described basic melting property Pro is obtained, in addition to the basic solid phase rate property, one or more conditions selected from screw rotational speed, back pressure, and cycle time and having respective constraints set therefor are desirably included in the basic melting property Pro.

When the above-described setting for the additional resin material Crs ends, the operator turns on the "molded product uniformization" key 37 on the setting screen Vs (step S8). As a result, the estimated solid phase rate of the molten resin is obtained by the solid phase rate calculation section Fx through the computation process based on the physical property value data Dc related to the additional resin material Crs and the solid phase rate calculation expression data Dm, and a set temperature at which the additional resin material Crs has the same viscosity as that of the initial resin material Cro is obtained (step S9). Also, the second solid phase rate property Prs which uses estimated solid phase rates of molten resin corresponding to screw positions (pitch numbers) is obtained by the second melting property calculation functional section Fq. Moreover, the second melting property (the second solid phase rate property) Prs which falls within the range defined by the constraints and approximates the basic melting property (the basic solid phase rate property) Pro is obtained by the molding condition conversion functional section Fc through the conversion process (step S10).

This second melting property Prs is registered as data and is graphically displayed by the graphic display section Vsg of the display 4d as shown in Fig. 6 (step S11). In this case, as shown in Fig. 6, the second melting property Prs is displayed together with the previously registered basic melting property Pro such that the second melting property Prs is superimposed on the basic melting property Pro. In the case where, as described above, the basic melting property Pro and the second melting property Prs are graphically displayed in the graphic display section Vsg of the display 4d, since the operator can reliably check, by the graphic display, the state where different resin materials are used, it is possible to enhance the easiness and reliability of implementation from the viewpoint of optimization.

In the case where the operator has judged, by viewing the graphic display, that uniformization has been performed sufficiently, the operator turns on an unillustrated confirmation key. As a result, the set temperatures and the molding conditions are changed (updated), and the optimization process ends (steps S12 and S13). In contrast, in the case where the operator has judged, by viewing the display, that uniformization has not yet been performed sufficiently, the operator changes some of the set temperatures and the molding conditions for fine adjustment (steps S12, S7, etc.). In the case where the operator has finally judged, by viewing the display, that uniformization has been performed sufficiently, the operator turns on the unillustrated confirmation key. As a result, the set temperatures and the molding conditions are changed (updated), and the optimization process ends (steps S12 and S13).

The case where the production lot of the resin material is changed at the time of switching from the initial resin material Cro to the additional resin material Crs has been described. However, the molding optimization method (the molding optimization device 1) according to the present embodiment can be utilized in the case where the grade of the resin material is changed; specifically, in the case where the initial resin material is switched to an additional resin material which is the same type as the initial resin material but differs in grade from the initial resin material (specifically, the grade is changed to a different grade so that the resin material melts slight easily due to, for example, change of the external environment), or the case where the same resin material manufactured by a different company is used as an additional resin material.

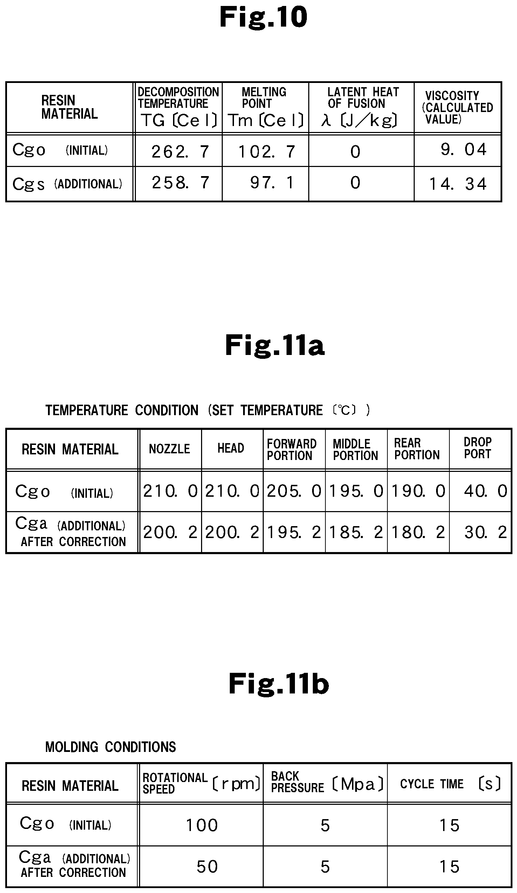

Next, the results of a verification test performed for confirming the effectiveness of the molding optimization method according to the present embodiment for the case where the grade of the molding material is changed will be described with reference to Figs. 10 to 13.

In the verification test, pellets of the above-described GPPS were used as the resin material C. An initial resin material used at the beginning was referred to as a sample Cgo, an additional resin material used additionally was referred to as a sample Cgs. Therefore, the initial resin material Cgo and the additional resin material Cgs are the same resin material although they differ in grade.

Fig. 10 shows the respective physical property values of the initial resin material Cgo and the additional resin material Cgs and also shows their viscosities (calculated values) based on the physical property values. Notably, unlike the case of the physical property values shown in Fig. 6, the latent heat of fusion was set to zero. As is apparent from Fig. 10, the viscosity of the initial resin material Cgo is 9.04 [g/10min] and the viscosity of the additional resin material Cgs is 14.34 [g/lOmin] because their grades differ from each other, and it can be confirmed that the flowability of the additional resin material Cgs is quite high.

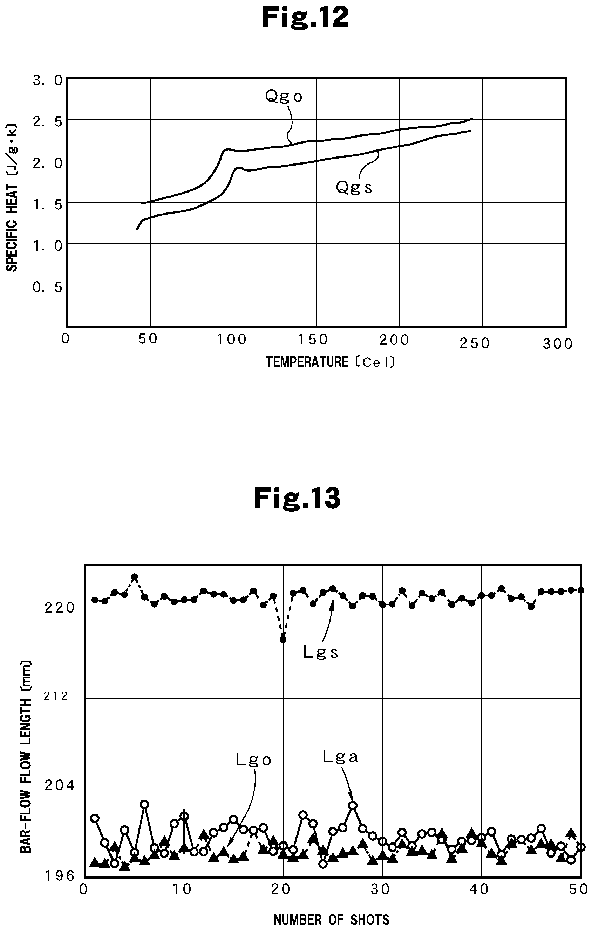

Fig. 12 shows a characteristic curve Qgo showing change in specific heat [J/g-K] of the initial resin material Cgo shown in Fig. 10 with temperature [Cel] and a characteristic curve Qgs showing change in specific heat [J/g·K] of the additional resin material Cgs with temperature [Cel]. Fig. 12 shows that the characteristic curves Qgo and Qgs also differ greatly. Notably, the characteristic curves Qgo and Qgs were drawn by using data collected by a thermal analyzer.

Fig. 11(a) shows the set temperatures for the initial resin material Cgo, and the set temperatures for the additional resin material Cgs after performance of correction (conversion); i.e., the corrected (converted) set temperatures for the additional resin material Cga. Fig. 11(b) shows the molding conditions for the initial resin material Cgo, and the molding conditions for the additional resin material Cgs after performance of correction (conversion); i.e., the corrected (converted) molding conditions for the additional resin material Cga.

As is apparent from Figs. 11(a) and 11(b), the corrected (converted) set temperatures for the additional resin material Cga were set, as a while, to be 9.8 [°C] lower than the set temperatures for the initial resin material Cgo, and the screw rotational speed was set to be 50 [rpm] slower.

Fig. 13 shows the bar-flow flow length [mm] measured by a bar-flow flow length measurement device for the case where molding was performed at the set temperatures shown in Fig. 11(a) and under the molding conditions shown in Fig. 11(b). Lgo shows the bar-flow flow length in the case where the initial resin material Cgo was used, Lgs shows the bar-flow flow length in the case where the additional resin material Cgs was used without correction of molding conditions, and Lga shows the bar-flow flow length in the case of the additional resin material Cga whose molding conditions were corrected (optimized).

As is apparent from Fig. 13, the flow length Lgs of the additional resin material Cgs whose molding conditions were not corrected tended to become about 22 to 24 [mm] longer than the flow length Lgo of the initial resin material Cgo. In contrast, the flow length Lga of the additional resin material Cga whose molding conditions were corrected (optimized) was approximately equal to the flow length Lgo of the initial resin material Cgo. Thus, it is confirmed that the molding optimization device 1 (the molding optimization method) according to the present embodiment is highly effective even in the case where resin materials of different grades are used.

Accordingly, in the case where changing of the production lot of the resin material and/or changing of the grade of the resin material is added to the conditions of switching from the initial resin material Cro, Cgo to the additional resin material Crs, Cgs, since it is possible to cover almost all of the problems that occur during actual production, the molding optimization method (molding optimization device 1) according to the present invention can be used most effectively from the viewpoint of solving the problems.

As described above, the molding optimization method of the injection molding machine M according to the present embodiment basically include the following steps. The basic molding conditions for the initial resin material Cro, Cgo used at the beginning of production of a predetermined molded product and the basic melting property Pro, Pgo related to the molten state of the initial resin material Cro, Cgo based on the basic molding conditions are obtained beforehand. When the additional resin material Crs, Cgs to which the initial resin material Cro, Cgo is switched to continue the production of the molded product is used, the second molding conditions for the additional resin material Crs, Cgs and the second melting property Prs, Pgs related to the molten state of the additional resin material Crs, Cgs based on the second molding conditions are obtained. Furthermore, the conversion process is performed to convert at least the set temperature of the second molding conditions by a predetermined conversion means so that the second melting property Prs, Pgs approximates the basic melting property Pro, Pgo. Therefore, for example, when a new resin material of a different production lot is added during production of the predetermined molded product, the operator is not required to reset the molding conditions in, so to speak, a cause unknown state. Therefore, it is possible to enhance production efficiency and reduce the number of defective products. In addition, even in the case where the resin material is changed, it is possible to secure the same molded product, thereby improving uniformity and quality. Thus, it is possible to reliably perform optimization from the relative viewpoint; namely, optimization for coping with, for example, changing of the production lot or grade of the resin material. In addition, the molding optimization device 1 according to the present embodiment includes the molding machine controller 4 having the optimization processing section 5. The optimization processing section 5 includes the basic molding condition setting functional section Ff, the basic melting property calculation functional section Fp, the second molding condition setting functional section Fs, the second melting property calculation functional section Fq, and the molding condition conversion functional section Fc which performs the conversion process of converting at least the set temperature of the second molding conditions by a predetermined conversion means so that the second melting property Prs, Pgs approximates the basic melting property Pro, Pgo. Therefore, it is possible to easily and reliably perform the molding optimization method in the injection molding machine M.

The best embodiment has been described in detail. However, the present invention is not limited to such embodiment, and, as to structures of details, shapes, materials, quantities, methods, etc., alteration, addition, and deletion can be performed arbitrarily within a range not departing from the gist of the present invention.

For example, the initial resin material Cro used at the beginning does not mean the first initial resin material Cro and means the resin material used before the additional resin material Crs, and the operator can freely designate the initial resin material Cro. Specifically, in the case where the best product was molded by the N th molding operation in which a resin material of a certain production lot was used, the resin material of the certain production lot used in the N th molding operation is selected as the initial resin material Cro, and a resin material of a different production lot used in the N+1 th molding operation and molding operations subsequent thereto is considered as the additional resin material Crs. Also, the case where the solid-phase rate property (estimated solid phase rate property) is used for the basic melting property Pro ⋯ and the second melting property Prs ⋯. has been described. However, various types of indexes that can quantitatively represent the molten state (the manner of melting) of the resin material can be used. Although it is desired to graphically display the basic melting property Pro ⋯ and the second melting property Prs ⋯, the display is not essential. Moreover, screw rotational speed, back pressure, and cycle time are shown as molding conditions for which constraints are set. However, other molding conditions may be added and constraints may be set for the added conditions. Setting of constraints is not essential. There has been described case where changing of the production lot of the resin material and/or changing of the grade of the resin material is included in the conditions for switching from the initial resin material Cro, Cgo to the additional resin material Crs, Cgs. However, the present invention can be similarly applied to the case where the initial resin material is switched to a resin material produced by a different maker.

**Industrial Applicability**

The molding optimization method and the molding optimization device according to the present invention can be applied to various types of injection molding machines which produce molded products by injecting and charging a plasticized molten resin into a die by a screw.

**Claims**

1.  A molding optimization method for an injection molding machine which optimizes molding conditions for producing a molded product by injecting and charging a plasticized molten resin into a die by a screw, the molding optimization method being **characterized in that**

    basic molding conditions for an initial resin material used at the beginning of production of a predetermined molded product, and a basic melting property related to a molten state of the initial resin material based on the basic molding conditions are obtained beforehand; and
    when an additional resin material to which the initial resin material is switched to continue the production of the molded product is used, second molding conditions for the additional resin material, and a second melting property related to a molten state of the additional resin material based on the second molding conditions are obtained, and a conversion process, including at least conversion of a set temperature, is performed for the second molding conditions by a predetermined conversion means such that the second melting property approximates the basic melting property.

2.  A molding optimization method for an injection molding machine according to claim 1, wherein the basic melting property includes at least a basic solid phase rate property showing change in solid phase rate with screw position.

3.  A molding optimization method for an injection molding machine according to claim 1, wherein the second melting property includes at least a second solid phase rate property showing change in solid phase rate with screw position.

4.  A molding optimization method for an injection molding machine according to claim 2, wherein the basic solid phase rate property is represented by estimated solid phase rates of molten resin corresponding to screw positions, the estimated solid phase rates being obtained by a computation process based on physical property value data related to the initial resin material and solid phase rate calculation expression data.

5.  A molding optimization method for an injection molding machine according to claim 3, wherein the second solid phase rate property is represented by estimated solid phase rates of molten resin corresponding to screw positions, the estimated solid phase rates being obtained by a computation process based on physical property value data related to the additional resin material and solid phase rate calculation expression data.

6.  A molding optimization method for an injection molding machine according to claim 2, wherein the basic melting property includes, in addition to the basic solid phase rate property, one or more conditions selected from screw rotational speed, back pressure, and cycle time for which respective constraints are set.

7.  A molding optimization method for an injection molding machine according to claim 3, wherein the second melting property includes, in addition to the second solid phase rate property, one or more conditions selected from screw rotational speed, back pressure, and cycle time for which respective constraints are set.

8. A molding optimization method for an injection molding machine according to claim 1, wherein a condition for switching from the initial resin material to the additional resin material includes changing of the production lot of the resin material.

9. A molding optimization method for an injection molding machine according to claim 1, wherein a condition for switching from the initial resin material to the additional resin material includes changing of the grade of the resin material.

10. A molding optimization method for an injection molding machine according to claim 1, wherein a condition for switching from the initial resin material to the additional resin material includes changing of the production lot of the resin material and changing of the grade of the resin material.

11. 12. A molding optimization device for an injection molding machine which optimizes molding conditions for producing a molded product by injecting and charging a plasticized molten resin into a die by a screw, the molding optimization device being **characterized by** comprising a molding machine controller in which an optimization processing section is provided, the optimization processing section comprising:

a basic molding condition setting functional section which sets basic molding conditions for an initial resin material used at the beginning of production of a predetermined molded product;
a basic melting property calculation functional section which obtains a basic melting property related to a molten state of the initial resin material based on the basic molding conditions;
a second molding condition setting functional section which sets second molding conditions for an additional resin material to which the initial resin material is switched to continue the production of the molded product;
a second melting property calculation functional section which obtains a second melting property related to a molten state of the additional resin material based on the second molding conditions; and
a molding condition conversion functional section which performs a conversion process, including at least conversion of a set temperature, for the second molding conditions by a predetermined conversion means such that the second melting property approximates the basic melting property.

12. A molding optimization device for an injection molding machine according to claim 11, wherein the optimization processing section includes:

a basic melting property calculation functional section which obtains, as the basic melting property, at least a basic solid phase rate property showing change in solid phase rate with screw position, and
a second melting property calculation functional section which obtains, as the second melting property, at least a second solid phase rate property showing change in solid phase rate with screw position.

13. A molding optimization device for an injection molding machine according to claim 12, wherein the molding machine controller includes a solid phase rate calculation section which obtains, as the basic solid phase rate property, estimated solid phase rates of molten resin corresponding to screw positions by a computation process based on physical property value data related to the initial resin material and solid phase rate calculation expression data, and obtains, as the second solid phase rate property, estimated solid phase rates of molten resin corresponding to screw positions by a computation process based on physical property value data related to the additional resin material and solid phase rate calculation expression data.

14. A molding optimization device for an injection molding machine according to claim 11, wherein the molding machine controller includes a display having a graphic display section for graphically displaying the basic melting property and the second melting property.

# Fig.1

**MOLDING MACHINE TYPE** — 31a

**SCREW TYPE** — 31b

**RESIN TYPE** — 31c

**REINFORCEMENT FIBER TYPE** — 31

ADDITION AMOUNT
FIBER LENGTH
— 31d

Vs

**RESIN PHYSICAL PROPERTY VALUES** — 32

☐ SPECIFIC HEAT
☐ HEAT CONDUCTIVITY
☐ DENSITY
☐ MELTING POINT ℃
☐ DECOMPOSITION TEMPERATURE ℃
☐ FUSION TEMPERATURE
☐ WATER ABSORPTION

**VISCOSITY**

◉ MFR CATALOG VALUE g／10min
○ MFR ESTIMATED VALUE
○ MEASUREMENT RESULT FROM MOLDING MACHINE
— 33

4d

**CONDITION SETTING**

ROTATIONAL SPEED | BACK PRESSURE | < > — 34c

☐ ACTUAL VALUE
MINIMUM VALUE
MAXIMUM VALUE

☐ UNIFORMIZATION RANGE OF MOLDED PRODUCTS
MINIMUM VALUE rpm
MAXIMUM VALUE rpm

— 34

NOZZLE 210 ℃  HEAD 210 ℃  FORWARD PORTION 200 ℃  MIDDLE PORTION 195 ℃  REAR PORTION 190 ℃  — 35

HOPPER TEMPERATURE 25 ℃

DROP PORT TEMPERATURE 40 ℃

**FLOW ANALYSIS START** — 36

**UNIFORMIZATION OF MOLDED PRODUCTS** — 37

EP 4 506 138 A1

# Fig.2

EP 4 506 138 A1

**Fig.3**

EP 4 506 138 A1

# Fig.4

```
            ┌──────────────┐
            │    START     │
            └──────┬───────┘
                   │
   ┌───────────────────────────┐
   │ SETTING OF MOLDING        │  S1
   │ CONDITIONS                │
   │ (INITIAL RESIN MATERIAL)  │
   └───────────┬───────────────┘
               │
   ┌───────────────────────────┐
   │ MOLDED PRODUCT            │  S2
   │ PRODUCTION PROCESS        │
   └───────────┬───────────────┘
               │
         ╱ IS ADDITIONAL ╲      No
        ⟨ RESIN MATERIAL   ⟩──────
         ╲ USED?         ╱   S3
            │ Yes
   ┌───────────────────────────┐
   │ DISPLAY MOLDING           │  S4
   │ CONDITIONS OF INITIAL     │
   │ RESIN MATERIAL            │
   └───────────┬───────────────┘
               │
   ┌───────────────────────────┐
   │ TURN ON FLOW              │  S5
   │ ANALYSIS START KEY        │
   └───────────┬───────────────┘
               │
   ┌───────────────────────────┐
   │ CALCULATION, REGISTRATION,│  S6
   │ AND DISPLAY OF BASIC SOLID│
   │ PHASE RATE                │
   └───────────────────────────┘
```

```
   ┌───────────────────────────┐
   │ SETTING PROCESS           │  S7
   │ FOR ADDITIONAL            │
   │ RESIN MATERIAL            │
   └───────────┬───────────────┘
               │
   ┌───────────────────────────┐
   │ TURN ON MOLDED            │  S8
   │ PRODUCT UNIFORMIZATION    │
   │ KEY                       │
   └───────────┬───────────────┘
               │
   ┌───────────────────────────┐
   │ CALCULATE SET             │  S9
   │ TEMPERATURE               │
   └───────────┬───────────────┘
               │
   ┌───────────────────────────┐
   │ CALCULATE SECOND          │  S10
   │ SOLID PHASE RATE          │
   │ UNDER CONSTRAINTS         │
   └───────────┬───────────────┘
               │
   ┌───────────────────────────┐
   │ DISPLAY SOLID             │  S11
   │ PHASE RATE                │
   └───────────┬───────────────┘
               │
         ╱              ╲      No
        ⟨  CONFIRMATION   ⟩──────
         ╲              ╱   S12
            │ Yes
   ┌───────────────────────────┐
   │ CHANGING                  │  S13
   │ PROCESS                   │
   └───────────┬───────────────┘
               │
            ┌──────────────┐
            │    END       │
            └──────────────┘
```

# Fig.5

S7

INPUT PHYSICAL PROPERTY VALUES OF ADDITIONAL RESIN MATERIAL — S71

INPUT ENDED? — S72
No
Yes

ARE CONSTRAINTS FOR SCREW ROTATIONAL SPEED PRESENT? — S73
No
Yes

SETTING OF CONSTRAINTS — S74

ARE CONSTRAINTS FOR BACK PRESSURE PRESENT? — S75
No
Yes

SETTING OF CONSTRAINTS — S76

ARE CONSTRAINTS FOR CYCLE TIME PRESENT? — S77
No
Yes

SETTING OF CONSTRAINTS — S78

SETTING OF SET TEMPERATURE (NO CONSTRAINT) — S79

# Fig.6

| RESIN MATERIAL | DECOMPOSITION TEMPERATURE<br><br>TG [Cel] | MELTING POINT<br><br>Tm [Cel] | LATENT HEAT OF FUSION<br><br>$\lambda$ [J/kg] | VISCOSITY (CALCULATED VALUE) |
|---|---|---|---|---|
| Cro (INITIAL) | 252.0 | 172.0 | 68966.7 | 4.4 |
| Crs (ADDITIONAL) | 256.0 | 171.6 | 69533.3 | 5.2 |

# Fig.7

| RESIN MATERIAL | | SET TEMPERATURE [℃] | | | | | |
|---|---|---|---|---|---|---|---|
| | | NOZZLE | HEAD | FORWARD PORTION | MIDDLE PORTION | REAR PORTION | DROP PORT |
| Cro | INITIAL | 200 | 200 | 200 | 195 | 190 | 40 |
| Crs | ADDITIONAL (NO CORRECTION) | 200 | 200 | 200 | 195 | 190 | 40 |
| Cra | ADDITIONAL (AFTER CORRECTION) | 196 | 196 | 196 | 191 | 186 | 36 |

# Fig.8

# Fig.9

# Fig.10

| RESIN MATERIAL | DECOMPOSITION TEMPERATURE TG [Ce I] | MELTING POINT Tm [Ce I] | LATENT HEAT OF FUSION $\lambda$ [J/kg] | VISCOSITY (CALCULATED VALUE) |
|---|---|---|---|---|
| Cgo (INITIAL) | 262. 7 | 102. 7 | 0 | 9. 04 |
| Cgs (ADDITIONAL) | 258. 7 | 97. 1 | 0 | 14. 34 |

# Fig.11a

TEMPERATURE CONDITION (SET TEMPERATURE [℃] )

| RESIN MATERIAL | NOZZLE | HEAD | FORWARD PORTION | MIDDLE PORTION | REAR PORTION | DROP PORT |
|---|---|---|---|---|---|---|
| Cgo (INITIAL) | 210. 0 | 210. 0 | 205. 0 | 195. 0 | 190. 0 | 40. 0 |
| Cga (ADDITIONAL) AFTER CORRECTION | 200. 2 | 200. 2 | 195. 2 | 185. 2 | 180. 2 | 30. 2 |

# Fig.11b

MOLDING CONDITIONS

| RESIN MATERIAL | ROTATIONAL SPEED [rpm] | BACK PRESSURE [Mpa] | CYCLE TIME [s] |
|---|---|---|---|
| Cgo (INITIAL) | 100 | 5 | 15 |
| Cga (ADDITIONAL) AFTER CORRECTION | 50 | 5 | 15 |

# Fig.12

# Fig.13

## INTERNATIONAL SEARCH REPORT

International application No.

**PCT/JP2022/040108**

**A. CLASSIFICATION OF SUBJECT MATTER**

***B29C 45/76***(2006.01)i; ***B29C 45/78***(2006.01)i
FI: B29C45/76; B29C45/78

According to International Patent Classification (IPC) or to both national classification and IPC

**B. FIELDS SEARCHED**

Minimum documentation searched (classification system followed by classification symbols)

B29C45/00-45/84

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-1183 A (NISSEI PLASTICS INDUSTRIAL CO.) 09 January 2020 (2020-01-09) entire text | 1-14 |
| A | JP 2017-222144 A (NISSEI PLASTICS INDUSTRIAL CO.) 21 December 2017 (2017-12-21) entire text | 1-14 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT<br>Information on patent family members | | International application No.<br>**PCT/JP2022/040108** | |
|---|---|---|---|
| Patent document<br>cited in search report | Publication date<br>(day/month/year) | Patent family member(s) | Publication date<br>(day/month/year) |
| JP 2020-1183 A | 09 January 2020 | (Family: none) | |
| JP 2017-222144 A | 21 December 2017 | (Family: none) | |

Form PCT/ISA/210 (patent family annex) (January 2015)

**REFERENCES CITED IN THE DESCRIPTION**

**Patent documents cited in the description**

- JP 2020001183 A

- JP H10272663 A